# EUROPEAN PATENT APPLICATION

(11) **EP 1 531 616 A2**
(43) Date of publication of application: **18.05.2005**
(21) Application number: 04105751.4
(22) Date of filing: 12.11.2004
(51) Int. Cl.: H04N 1/60

(54) **Printing System**

(30) Priority: 13.11.2003 KR 2003080013
(71) Applicant: Samsung Electronics Co., Ltd., Suwon-si, Gyeonggi-do 442-742 (KR)
(72) Inventor: Jung, Son-hae, 1118, Jukjeon-dong,Yongin-si,Gyeonggi-do (KR)
(74) Representative: Geary, Stuart Lloyd

(57) **Abstract**

A print density setting method for image-forming apparatuses is disclosed. The print density setting method for an image-forming apparatus capable of forming an image based on at least three or more colour data and black data comprises steps of, when the image is formed in monotone, setting a combination ratio of data for a composite black created based on a mixing of the three colours, to the data for the black colour; and setting print density of the image to be formed based on the black data in the set combination ratio. Such a print density setting method can vary the density of an image created according to user's taste, and, when a user wants to minimize the ink consumption amount, the user sets the consumption amounts of the colour ink and the black inks.

## Description

The present invention relates to a printing system comprising, colour printing means operable to print a composite black using a combination of coloured pigments and a black pigment, user input means and control means for controlling the colour printing means to print in response to user input commands.

In general, inkjet printers, bubble jet printers and colour laser printers use four ink colours, which are typically cyan, magenta, yellow and black (CMYK) ink colours. Inkjet and bubble jet printers reproduce full colour images with CMYK inks and laser printers reproduce colour images with the CMYK toners. Unlike an image signal for reproducing a white colour in an additive colour space, which is a combination of red, green and blue (RGB) colours mixed together, the image-forming apparatuses using the four CMYK inks or toners reproduce the colour black when the three C, M and Y colours are mixed.

Thus, the image-forming apparatuses capable of colour printing can create the colour black by using the three CMY colours, and the created black colour is generally referred to as the composite black colour. Such a composite black colour has the feature of appearing "natural" when black and white images are reproduced with colour inks or toners, as compared to images created by black inks or toners.

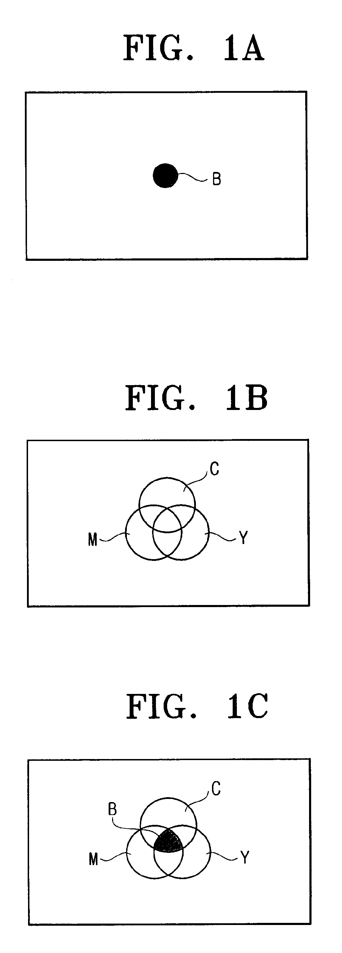

Figures 1A, 1B and 1C are views for explaining a method for creating a composite black colour using an image-forming apparatus.

Figure 1A is a view showing a mono black colour on a sheet of paper. Referring to Figure 1A, the mono black colour is created when the black ink (K) (or toner) of the CMYK inks (or toners) is printed on a sheet of paper. The mono black enables the clearest print quality to be obtained since the black ink (K) is directly printed on a sheet of paper.

Next, Figure 1B is a view showing a composite black colour created using the three CMY colours. The composite black colour based on the three CMY colours is created by mixing the C, M, and Y colours. The overlapped portion of the three colours (CMY) creates the colour black, or a colour near the colour black, and the non-overlapped portions have the original colours. Thus, when the colour black is expressed by using the composite black created with the three CMY colours, the effect is blurry looking in comparison to the mono black colour. The use of such an effect enables images, such as water-colour paintings or pictures, to be expressed smoothly, but is not appropriate for character expressions since the characters look blurred when expressed.

Lastly, Figure 1C is a view showing a composite black colour created using the CMYK colours. Referring to Figure 1C, the consumption of the CMY inks (or toners) may be reduced by additionally firing the K ink (or toner) to create a composite black colour. In general, the colour inks or toners are more expensive than the black inks or toners, so the use of such a method can reduce the consumption of the CMY inks or toners. Hereinafter, the composite black colour refers to a colour created with the CMYK colours mixed as described in Figure 1C.

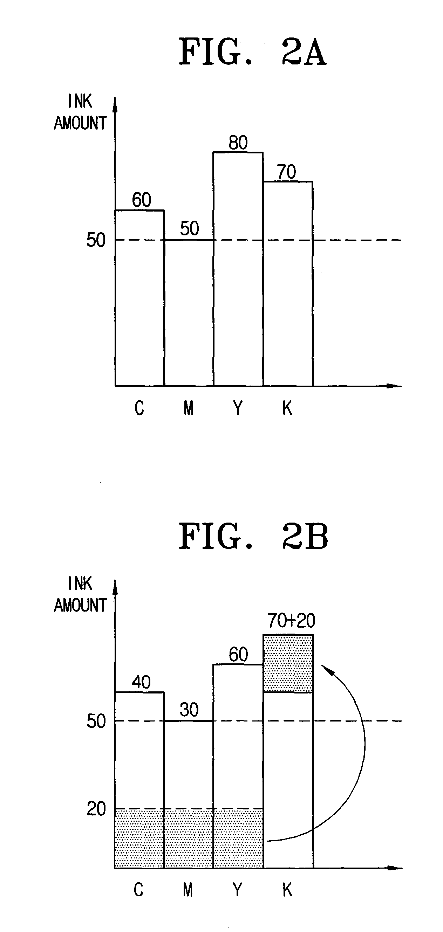

Figure 2A and Figure 2B are views showing the creation of a composite black according to an Under Colour Replacement (UCR) method.

First, Figure 2A is a view showing the amounts of ink consumed, colour by colour, in the creation of a composite black colour. More specifically, Figure 2A shows one example where CMYK inks in amounts of 60µℓ, 50µℓ, 80µℓ, 70µℓ respectively, form one composite black colour. Here, the consumption amounts of the respective colour inks are only exemplary numerical values with the unit of µℓ, mℓ, or the like, which are given for the purpose of easy explanation and understanding. However, one will understand that this should not be construed as limiting.

In one particular example, 50µℓ of black colour is created using 50µℓ of each of the C, M and Y inks, which is equivalent to the same density as that of the black colour created by 50µℓ of black ink (K). Theoretically, the black colour created from the CMY inks provides almost the same effect as the black ink (K) by itself. However, greater amounts of CMY inks are consumed in comparison to the black ink (K), in order to generate a composite black colour of equal density. More specifically, the density of the black colour using only black ink (K) is almost the same as that of the black colour created by the respective CMY inks. Furthermore, the density of the consumed amount of 50µℓ of the black ink (K) composed from the CMY inks is nearly the same as the density of the consumed amount of 100µℓ of the black ink (K). Accordingly, with reference to Figure 2A, 10µℓ of cyan ink, 0µℓ of magenta ink and 30µℓ of yellow ink are required to create the composite black colour.

Figure 2B is a view showing the Under Colour Replacement (UCR) method for reducing the consumption amounts of the CMY inks from the ink consumption amounts shown in Figure 2A.

As shown in Figure 2B, the UCR method is to use 20µℓ of the black ink (K) to reduce the consumption of the respective CMY inks by corresponding amounts of 20µℓ each. That is, the consumption of the CMYK inks shown in Figure 2A amounts to 260µℓ (60µℓ + 50µℓ + 80µℓ + 70µℓ), but the consumption of the CMYK inks shown in Figure 2B amounts to only 220µℓ (40µℓ + 30µℓ + 60µℓ + 90µℓ), so upon the creation of the composite black, the application of the UCR method can reduce the total amount of ink consumed.

However, in the conventional UCR method the ratio of the CMY ink volumes that are changed into black ink volume is fixed constant, so users cannot change the ratio arbitrarily. This is because the makers of conventional image-forming apparatuses apply the UCR method to keep image quality appropriate, but this causes a problem since the UCR method cannot cope with the user's needs in respect of every type of usage. For example, performing test printing causes users to waste unnecessary ink upon printing based on the ratio set by the maker, and the images formed based on the UCR method set by the maker may not satisfy the user's taste. Thus, embodiments of the present invention describe a print density setting method for image-forming apparatuses capable of enabling image quality to be set by individual users as well as reducing the consumption amount of ink much more.

The present invention has been developed in order to solve the above drawbacks and other problems associated with the conventional arrangement. An aspect of the present invention is to provide a print density setting method for image-forming apparatuses capable of enabling users to set the composition of the composite black colour by use of colour inks and black inks as well as reducing the consumption amount of the inks.

A printing system, according to one aspect of the present invention, is characterised in that the user input means is operable to allow a user to set the relative proportions of coloured to black pigment in said composite black colour.

A printing system, according to another aspect of the present invention, is characterised in that the user input means is operable to allow a user to set the proportion of black pigment in the composite black colour independently.

The printing system may comprise a computer programmed with a printer driver providing a graphical display element of said user input means and said control means. The computer may be programmed using a signal representing the driver program. The signal may be stored on or in a data carrier.

Embodiments of the present invention will now be described, by way of example, with reference to Figures 3A to 5 of the accompanying drawings, in which:
Figures 1A, 1B and 1C are views for explaining a method for creating a composite black colour using an image-forming apparatus;
Figure 2A and Figure 2B are views showing the creation of a composite black according to an Under Colour Replacement (UCR) method;
Figures 3A, 3B, and 3C are views for explaining an example of a print density setting method according to the present invention;
Figure 4 is a view showing an example an interface for a driver program to which the UCR method is applied according to the present invention; and
Figure 5 is a flowchart showing an example of a print density setting method for image-forming apparatuses according to the present invention.

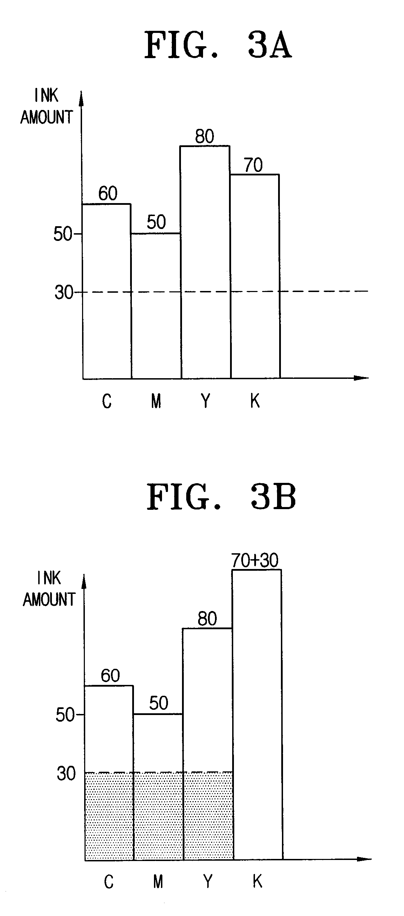

Figure 3A shows exemplary consumption amounts of colour inks for creating a composite black. Referring to Figure 3A, the CMYK colour inks are fired in amounts of, for example, 60µℓ, 50µℓ, 80µℓ and 70µℓ of ink, respectively, to create one composite black. The consumption amounts of the individual colour inks are numerical values given for the convenience of explanation and understanding and, therefore, the units can be µℓ, mℓ, or the like, but are not limited thereto. In the present embodiment, the unit for the ink consumption amounts is µℓ for the purpose of easy understanding, but one will understand that this should not be construed as limiting.

As shown in Figure 3A, at least 50µℓ of each of the C, M and Y inks are used in the creation of the composite black colour. However, 50µℓ of each of the C, M and Y inks creates a portion of black colour, the density of which is the same as that formed by 50µℓ of the black ink (K) alone. Thus, whilst the amount of CMY inks consumed is 150µℓ, the density substantially corresponds to that formed by 50µℓ of the black ink (K) alone.

Therefore, the density formed by the consumption of, for example, 50µℓ of each of the respective CMY inks is the same as that formed by the consumption of 50µℓ of the black ink (K) alone. It follows that, using 50µℓ of black ink (K) in conjunction with 10µℓ, 0µℓ and 30µℓ of the CMY inks, respectively, has the same visual effect as using the 60µℓ, 50µℓ and 80µℓ amounts of the CMY inks shown in Figure 2A. Thus, 50µℓ of cyan ink, 50µℓ of magenta ink and the 50µℓ of yellow ink need not be used to create the same colour black.

Figure 3B shows a compensation amount for black ink with respect to the colour inks as they would be reduced when the conventional Under Colour Replacement method is applied.

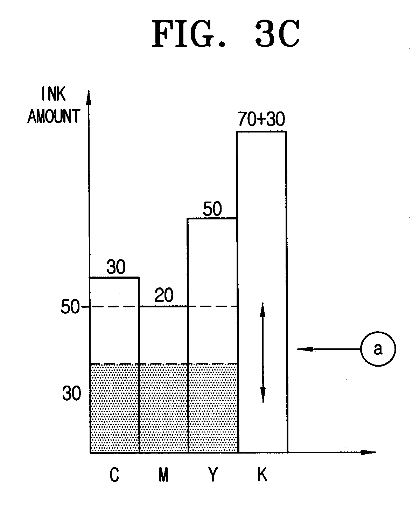

Figure 3C shows an Under Colour Replacement method for increasing or decreasing the final ink consumption amount by increasing or decreasing the black ink compensated for in Figure 3B according to the present invention. A reference symbol "**a**" denotes a gauge bar for increasing or decreasing the amount of the black ink (K) by users, by which the users can decrease the amount of black ink (K) consumed to decrease the final amount of CMYK inks consumed. For example, when the gauge bar is adjusted such that the consumption amount of black ink (K) is set to 50µℓ, the whole ink consumption amounts to 150µℓ (30µℓ + 20µℓ + 50µℓ + 50µℓ), so the ink consumption amount can be further decreased as compared to the conventional Under Colour Replacement method. On the other hand, when a user wants an image to be darker, a greater amount of ink can be consumed in comparison to the conventional UCR method. However, if the user wishes to decrease the amount of ink consumed, the Under Colour Removal method according to the present invention is very useful to the user. In this case, when the Under Colour Removal method is to be applied, the conventional Under Colour Replacement (UCR) method can be used as well, or the Under Colour Removal can be used alone.

The description has been made with respect to the colour inks and the black ink with reference to Figures 3A to 3C, for example, for the convenience of explanation, but, the same description can be applied to laser printers using colour toners and the black and white toner, even though it is not described in this embodiment to avoid the same repetitive description. However, one will understand that the concept of the present invention should not be construed as limited to the inkjet or bubble jet printers only. Further, the description has been made on the CMYK inks throughout the present disclosure, but the present invention can be applied to a variety of image-forming apparatuses using five or six inks colour rather than the CMYK inks. For example, image-forming apparatuses or photo printers using six inks such as cyan, magenta, yellow, light cyan, light magenta, and black, can also be applied, because the Under Colour Removal or the Under Colour Replacement (UCR) can be applied to the additional colours, not only the CMYK colours.

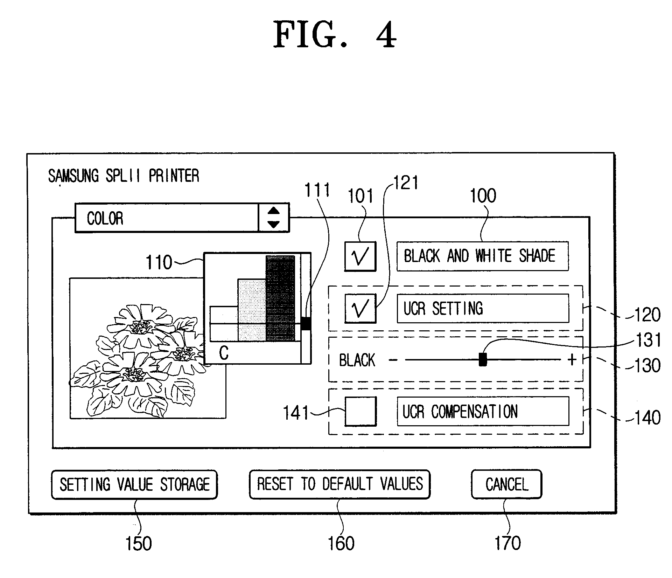

In general, image-forming apparatuses such as inkjet printers, laser printers and digital photocopiers are connected to a personal computer (not shown), and a driver program is installed in the personal computer to drive a corresponding image-forming apparatus. The installed driver program with a user interface program therefore enables a user to set the print quality and the print options in detail. Referring to Figure 4, a reference number 101 denotes an option for setting a black and white/colour print mode. Reference number 110 denotes an option for setting a ratio of the composite black by means of a sliding gauge bar 111. Reference number 120 denotes an option for selecting whether or not an option of the Under Colour Removal is applied according to the present invention by means of an actuating button 121. Reference numeral 130 denotes an option for increasing or decreasing the black ink, which is performed by sliding gauge bar 131 right and left, respectively, upon the application of the Under Colour Removal according to the present invention. Reference number 140 denotes an option for selecting whether or not the conventional Under Colour Replacement method is applied together with the Under Colour Removal according to the present invention. A reference number 150 denotes an option for storing, in the driver program, setting values selected by a user. Reference number 160 denotes an option for loading default setting values into the driver program. Reference number 170 denotes an option for canceling a value set by the user.

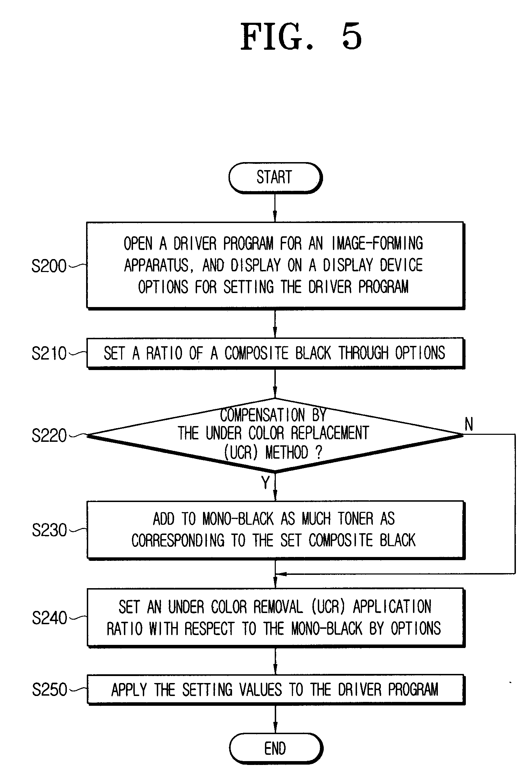

Referring to Figure 5, firstly a user selects a driver program for the image-forming apparatus and displays the user interface window on the screen for setting (S200). The user interface options displayed on the screen can be found in Figure 4. Next, if the user processes in mono-tone and prints a colour image, the user presses a check box 101 for selection that is provided on the left side of the black and white option 100. If the check box is selected, the option 110 for setting a mixture ratio for a composite black is displayed on one side of the window. The user moves the gauge bar 111 up and down by means of an input device such as a mouse (not shown) or a keyboard (not shown) to set the ratio of the black created with the CMY colours (S210). Next, the user selects whether the Under Colour Replacement method is applied (S220) according to the ratio of the composite black that has been set in step S210. When the Under Colour Replacement method is selected to be applied, the consumption amount of the black ink (K) is increased to as much as the composite black colour created with the CMY inks (S230). If the Under Colour Replacement method is not selected to be applied, step S240 is carried out. In step S240, the Under Colour Removal method is applied to the mono-black ink as set in the options at S210, to thereby increase or decrease the consumption amount of the black ink. The user moves the gauge bar 131 provided on the option 130 to set the amount of the black ink to be increased or decreased. As the gauge bar 131 of the option 130 moves to the right, the density of an image to be printed by the image-forming apparatus becomes darker, and, as the gauge bar 131 moves in the opposite direction, the density of the image becomes lighter. Lastly, if the user selects the setting value storage option 150, a setting value selected by the user is applied to the driver program (S250).

As described above, the user can set the print quality for an object that he wishes to print, as well as reduce the ink consumption amount by adjusting the consumption amounts of the colour ink and the black ink using the gauge bars 111 and 131. As described above, embodiments of the present invention can vary the density of an image created according to a user's taste, and, when a user wants to minimize the ink consumption amount, the embodiments of the present invention enable the user to set the consumption amounts of the colour ink and the black inks as much as the user wants. The description has been primarily made with respect to colour inks, but can be applied to the colour toners in the same manner. Even in case of colour toners, the consumption amount of the toners can be minimized while obtaining the image quality that the users wish.

## Claims

1. A printing system comprising:
colour printing means operable to print a composite black using a combination of coloured pigments and a black pigment;
user input means; and
control means for controlling the colour printing means to print in response to user input commands,
**characterised in that** the user input means is operable to allow a user to set the relative proportions of coloured to black pigment in said composite black colour.

2. A printing system comprising:
colour printing means operable to print a composite black using a combination of coloured pigments and a black pigment;
user input means; and
control means for controlling the colour printing means to print in response to user input commands,
**characterised in that** the user input means is operable to allow a user to set the proportion of black pigment in the composite black colour independently.

3. An apparatus according to claim 1 and claim 2.

4. A printing system according to any one of claim 1, 2 or 3, comprising a computer programmed with a printer driver providing a graphical display element of said user input means and said control means.

5. A signal representing a driver program for programming a computer for use as the computer in a printing system according to claim 4.

6. A data carrier having a signal according to claim 5 recorded thereon or therein.

7. A print density setting method for an image-forming apparatus capable of forming an image based on data with respect to at least three colors and data with respect to a black color, the method comprising the steps of:
when the image is formed in monotone, setting a combination ratio of data for a composite black created based on mixing at least three colors, to the black color data; and
setting a print density of the image to be formed based on the black color data in the set combination ratio.

8. The print density setting method as claimed in claim 7, wherein the step of setting the combination ratio includes the steps of:
displaying on a predetermined display device a menu for setting the combination ratio of a composite black color data to the black color data; and
setting print density based on the respective color data and black color data to create the composite black color through menu options.

9. The print density setting method as claimed in claim 8, wherein the step of setting the print density based on the black data comprises the steps of:
setting reference values with respect to the respective color data; and
decreasing the print density based on the respective color data according to the set reference values, and compensating for the print density based on the black color data by the decreased print density.

10. The print density setting method as claimed in claim 9, wherein the step of setting the print density of the image to be formed based on the black color data increases or decreases the print density with respect to the compensated black color data.

11. The print density setting method as claimed in claim 8, wherein the menu options include:
a first option for setting the print density reference values with respect to the respective color data; and
a second option for increasing or decreasing the print density based on the black color data.

12. The print density setting method as claimed in claim 7, wherein the steps of setting the combination ratio and setting the image print density are implemented in a form of a driver program on an information processing device applying print data to the image-forming apparatus.

13. The print density setting method as claimed in claim 7, wherein the combination ratio is provided in the image-forming apparatus in advance.

14. The print density setting method as claimed in claim 7, wherein the image-forming apparatus is any of an inkjet printer, a bubble jet printer, a laser printer, a digital photocopier, and a combination machine constructed with selected ones of the above three devices.
